# EUROPÄISCHE PATENTSCHRIFT

(11) **EP 3 024 999 B1**
(45) Veröffentlichungstag und Bekanntmachung des Hinweises auf die Patenterteilung: **17.05.2017**
(21) Anmeldenummer: 14744531.6
(22) Anmeldetag: 25.07.2014
(51) Int. Cl.: E04G 23/02, G21C 19/20

(54) **VERFAHREN UND VORRICHTUNG ZUR REPARATUR EINES SCHADENS AN EINER UNTER WASSER BEFINDLICHEN BEHÄLTERWAND**
METHOD AND DEVICE FOR REPAIRING DAMAGE TO A CONTAINER WALL LOCATED UNDER WATER
PROCÉDÉ ET DISPOSITIF PERMETTANT LA RÉPARATION D'UN DOMMAGE SUR UNE PAROI DE CONTENANT SITUÉE SOUS L'EAU

(30) Priorität: 26.07.2013 DE 102013108008; 26.07.2013 DE 102013108010
(43) Veröffentlichungstag der Anmeldung: 01.06.2016
(73) Patentinhaber: AREVA GmbH, 91052 Erlangen (DE)
(72) Erfinder: KRÄMER, Georg, 91346 Wiesenttal (DE); MEIER-HYNEK, Konrad, 91074 Herzogenaurach (DE); BISCHOFF, Bernd, 91334 Hemhofen (DE); NEUMEISTER, Martin, 91361 Pinzberg (DE)
(74) Vertreter: Schlögl, Markus
(86) Internationale Anmeldenummer: PCT/EP2014/066048
(87) Internationale Veröffentlichungsnummer: WO 2015/011270

(56) Entgegenhaltungen:
- DE-U1- 8 434 397
- US-A1- 2010 192 368
- US-A1- 2013 145 594

## Beschreibung

Die Erfindung betrifft ein Verfahren und eine Vorrichtung zur Reparatur eines Schadens an einer unter Wasser befindlichen Behälterwand.

Behälterwände wie bspw. von Brennelementlagerbecken eines Kernkraftwerkes können insbesondere an Schweißnähten Schäden bzw. schadhafte Stellen aufweisen. Schäden an Schweißnähten beruhen dabei häufig auf chlorinduzierten Spannungsrisskorrosionen, da sie auf Grund ihrer Konstruktion und Rahmenbedingungen hierfür anfällig sind. Aus abschirmungstechnischen Gründen darf weiterhin insbesondere in Brennelementlagerbecken das Wasser nicht abgelassen werden, so dass eine schadhafte Stelle des Behälters unter Wasser repariert werden muss. Zur Reparatur des Schadens dient ein Klebematerial, das auf die schadhafte Stelle geklebt werden muss.

Zur Reparatur des Schadens dient ein Klebematerial, das mittels einer Reparaturvorrichtung auf die schadhafte Stelle aufgetragen werden muss. Wenn die schadhafte Stelle und auch der umgebende Raum aus strahlungstechnischen Gründen für Menschen nicht zugänglich sind, wird insbesondere eine Positionierung der Reparaturvorrichtung erschwert. Eine Reparaturvorrichtung aus der Stand der Technik ist aus DE8434397U1 bekannt.

Aufgabe der vorliegenden Erfindung ist es daher ein verbessertes Verfahren und eine verbesserte Vorrichtung zur Reparatur eines Schadens an einer unter Wasser befindlichen Behälterwand anzugeben.

Hinsichtlich der Vorrichtung wird diese Aufgabe gelöst durch eine Reparaturvorrichtung mit den Merkmalen des Patentanspruches 1. Hinsichtlich des Verfahrens wird die Aufgabe gelöst durch ein Verfahren zur Reparatur eines Schadens an einer unter Wasser befindlichen Behälterwand mit den Merkmalen des Patentanspruches 9.

Vorteilhafte Ausgestaltungen der Erfindung sind Gegenstand der Unteransprüche.

Demnach umfasst die erfindungsgemäße Reparaturvorrichtung einen Träger, welcher Mittel aufweist, die zu dessen Befestigung an der Behälterwand dienen.

Auf dem Träger ist eine Reparaturmatrize angeordnet, welche mindestens eine Einspritzöffnung sowie mindestens eine Austrittsöffnung aufweist und ferngesteuert gegen die Behälterwand gedrückt werden kann, um den Schaden, also die schadhafte Stelle der Behälterwand zu überdecken und einen durch Reparaturmatrize und Behälterwand gebildeten Raum abzudichten. Unter einer Behälterwand ist jede Wand eines Behälters, also beispielsweise Seitenwände, in einem Behälter befindliche Trennwände aber auch der Boden oder Deckel eines Behälters zu verstehen.

Auf dem Träger ist ferner mindestens ein Reservoir für einen Klebstoff und eine fernsteuerbare Einspritzvorrichtung zum Einspritzen von Klebstoff aus dem Reservoir in die Einspritzöffnung der Reparaturmatrize angeordnet, so dass mittels des Klebstoffes der durch die Reparaturmatrize und Behälterwand gebildete Raum gefüllt wird. Die Reparaturmatrize bildet damit eine Art äußere Form für den zu verklebenden Klebstoff.

Mit einer derartigen Reparaturvorrichtung ist es also möglich, einen selbst unter Wasser befindlichen Bereich einer Behälterwand mit Klebstoff ferngesteuert zu reparieren. Dazu wird die Reparaturvorrichtung mit Hilfe des an dem Träger angeordneten Befestigungsmittels, welches vorzugsweise Saugfüße umfasst, befestigt.

Als nächstes wird die Reparaturmatrize derart an die Behälterwand gedrückt, dass die schadhafte Stelle von der Reparaturmatrize überdeckt wird. Behälterwand und Reparaturmatrize bilden dann einen abgeschlossenen Raum, in den nachfolgend durch die in der Reparaturmatrize vorhandene Einspritzöffnung Klebstoff mittels der ebenfalls auf dem Träger angeordneten Einspritzvorrichtung eingespritzt wird. Somit wird der durch die Reparaturmatrize und Behälterwand gebildete Raum mit Klebstoff gefüllt. In dem Reservoir für den Klebstoff ist somit mindestens so viel Klebstoff enthalten, dass der gesamte Raum mit Klebstoff gefüllt werden kann. Das Reservoir muss also dementsprechend mindestens so dimensioniert sein, dass sein Volumen mindestens so groß, bevorzugterweise größer ist als der durch Behälterwand und Reparaturmatrize gebildeten Raum.

Bei einer bevorzugten Ausgestaltung der Erfindung weist die Reparaturvorrichtung eine Kupplung auf, mit der diese mit einer Positioniervorrichtung verbindbar ist. Eine Positioniervorrichtung kann dabei jedes Hilfsmittel darstellen, mit dem die Reparaturvorrichtung an dem vorgesehenen Ort, also der schadhaften Stelle der behälterwand positioniert werden kann.

Vorzugsweise handelt es sich bei der Positionierungshilfe um ein Unterwasserschwebefahrzeug. Ein derartiges Fahrzeug ist bspw. aus der EP 1462787 B1 bekannt. Mit dem Unterwasserfahrzeug kann die erfindungsgemäße Reparaturvorrichtung ferngesteuert durch im Behälter befindliches Wasser manövriert und somit zu einer schadhaften Stelle der Behälterwand bewegt werden.

Eine Positioniervorrichtung kann in einem einfachen Fall auch durch ein Gestänge oder auch durch einen Seilzug gebildet werden. Auch damit kann die Reparaturvorrichtung aus sicherer Entfernung vom Bedienpersonal zu dem gewünschten Ort bewegt werden. Für eine bessere Manövrierfähigkeit der Reparaturvorrichtung unter Wasser können auch an der Reparaturvorrichtung selbst ein oder mehrere Antriebe angebracht sein, die eine Bewegung der Reparaturvorrichtung unter Wasser ermöglichen.

Ferner kann die Positioniervorrichtung auch durch ein Schienensystem und einem an die Reparaturvorrichtung angekoppelten Schlitten gebildet werden.

Mit Hilfe eines Lasers und einer oder mehreren Kameras, die an der Positioniervorrichtung adaptiert sind, kann eine genaue Positionierung der erfindungsgemäßen Reparaturvorrichtung an der schadhaften Stelle der Behälterwand erfolgen. Dabei werden mittels des Lasers eine Zielmarkierung wie beispielsweise ein oder mehrere Punkte, ein Fadenkreuz oder auch für die Reparaturmatrize charakteristische Umrisslinien an die Behälterwand projiziert. Es wird dann die Zielmarkierung mit der schadhaften Stelle entsprechend in Deckung gebracht. Nachdem die Reparaturvorrichtung an der schadhaften Stelle positioniert und anhand der Mittel zur Befestigung an der Behälterwand befestigt ist, kann die Reparaturvorrichtung mit Hilfe der Kupplung von der Positioniervorrichtung wie beispielsweise des Unterwasserschwebefahrzeugs entkoppelt werden.

Zur Vorbereitung der anstehenden Reparaturarbeiten weist die Reparaturvorrichtung in einer bevorzugten Ausführungsform eine Reinigungsvorrichtung auf, mit der zunächst die zu reparierende schadhafte Stelle gereinigt werden kann. Danach wird wie oben beschrieben die Reparaturmatrize an der schadhaften Stelle positioniert.

Um eine besonders effiziente Reparatur zu ermöglichen, wird die schadhafte Stelle mittels eines Mehr-Komponenten-Klebstoffes, beispielsweise eines Zwei-Komponenten-Klebstoffes repariert. Um den Mehr-Komponenten-Klebstoff vor Ort, also erst während des Einsatzes der Reparaturvorrichtung an der schadhaften Stelle zu mischen, weist das Reservoir entsprechend viele Kammern für jeweils eine Komponente des Mehr-Komponenten-Klebstoffs auf. Bei Einsatz eines Zwei-Komponenten-Klebstoffes weist also das Reservoir zwei Kammern auf.

Ferner umfasst der Träger eine Mischvorrichtung, mit deren Hilfe die einzelnen Komponenten unmittelbar vor dem Auftragen an die gewünschte Stelle gemischt werden. Nach dem Mischen der einzelnen Komponenten wird dann der Klebstoff durch die mindestens eine Einspritzöffnung, vorzugsweise durch mehrere Einspritzöffnungen der Reparaturmatrize in den zwischen Reparaturmatrize und Behälterwand gebildeten Raum gefüllt. Durch eine weitere Öffnung der Reparaturmatrize, der Austrittsöffnung kann zwischen Behälterwand und Reparaturmatrize befindliches Wasser aus dem durch diese beiden Elemente gebildeten Raum in den Behälter zurückfließen. Wenn also dieser Raum nach und nach mit dem Klebstoff gefüllt wird, wird durch den Klebstoff das Wasser verdrängt, welches durch die Austrittsöffnung den Raum verlassen kann. Nach Beendigung des Einspritzvorganges werden die Einspritz- und Austrittsöffnungen verschlossen, um den Raum von den Zu-und Ableitungen zu trennen. Durch das Befüllen des Raumes und des anschließenden Aushärtens des Klebstoffes wird der Schaden an der Behälterwand behoben.

Um einen Schutz des verklebten Klebstoffes zu gewährleisten, umfasst die Reparaturvorrichtung zusätzlich ein Abdeckblech. Dieses kann in der Vorbereitungsphase in der beispielsweise auch die Reparaturvorrichtung mit Klebstoff bestückt wird, in die Reparaturmatrize eingelegt werden. Auch das Abdeckblech weist mindestens eine Einspritzöffnung zum Einspritzen von Klebstoff in den Raum zwischen Abdeckblech und Behälterwand und mindestens eine Austrittsöffnung zum Austritt von Wasser aus diesem Raum auf. Nach dem Reparaturvorgang bleibt das Abdeckblech auf dem Klebstoff haften, so dass es diesen schützt.

Beim erfindungsgemäßen Verfahren zur Reparatur eines Schadens an einer unter Wasser befindlichen Behälterwand kommt die vorstehend beschriebene Reparaturvorrichtung zum Einsatz.

Das Verfahren ist insbesondere hinsichtlich der Positionierbarkeit der Reparaturvorrichtung für die Reparatur des Schadens an der unter Wasser befindlichen Behälterwand verbessert.

In einer vorteilhaften Ausgestaltung der Erfindung umfasst das Verfahren folgende Schritte:
a) Bereitstellen eines Containers, in dem sich ein Gestell mit einer Aufzugsvorrichtung befindet, wobei innerhalb des Gestells eine Dekontaminationsvorrichtung und ein Transportbehältnis mit der Reparaturvorrichtung angeordnet sind,
b) Ausladen des Gestells aus dem Container,
c) Platzierung des Gestells am Rand des Behälters,
d) Ausfahren der Dekontaminationsvorrichtung und des Transportbehältnisses aus dem Gestell, so dass sich die Dekontaminationsvorrichtung und das Transportbehältnis über der Wasseroberfläche befinden,
e) Herablassen des Transportbehältnisses mit der Reparaturvorrichtung in den mit Wasser gefüllten Behälter.

Durch das Verfahren wird erreicht, dass zum Einen ein einfacher Transport der Reparaturvorrichtung und zum Anderen eine anschließende Positionierung auch in einem für Menschen unzugänglichen Bereich erfolgen können.

In dem Container befinden sich sämtliche zur Durchführung des Verfahrens benötigten Komponenten. Zusätzlich zu den oben aufgeführten Komponenten können dies beispielsweise zusätzlich Videotechnik, Kompressoren, Steuerungselemente und eine Vakuumstation sein. Der Container dient als sicherer und kompakter Aufbewahrungsort aller zum Durchführen des Verfahrens benötigten Mittel.

Um eine Manövrierbarkeit der Reparaturvorrichtung insbesondere unter Wasser zu ermöglichen, ist diese mit einer, insbesondere mit der vorstehend beschriebenen Positioniervorrichtung verbunden, die sich zu Beginn des Verfahrens ebenfalls in dem Transportbehältnis befindet. Eine Positioniervorrichtung kann dabei jedes Hilfsmittel darstellen, mit dem die Vorrichtung an dem vorgesehenen Ort, also der schadhaften Stelle der Behälterwand positioniert werden kann.

Vorzugsweise handelt es sich bei der Positionierungshilfe um das Unterwasserschwebefahrzeug, welches beispielsweise aus der EP 1462787 B1 bekannt ist.

Mit der Positioniervorrichtung bzw. dem Unterwasserfahrzeug kann die erfindungsgemäße Vorrichtung ferngesteuert durch im Behälter befindliches Wasser manövriert und somit zu einer schadhaften Stelle der Behälterwand bewegt werden.

Wird der Behälter zunächst in Schritt a) auf einem Niveau bereitgestellt, welches niedriger als die Oberkante der Behälterwand liegt bzw. befinden sich zwischen dem Ort der Bereitstellung und der Behälterwand Barrieren wie beispielsweise Mauern, so wird das Gestell mittels einer Hubvorrichtung wie vorzugsweise ein Kran in Schritt c) am Rand des Behälters platziert. Hierfür befindet sich an dem Gestell ein geeignetes Element, wie beispielsweise eine Öse, in die beispielsweise ein Kranhaken eingreifen kann, so dass das Gestell samt Reparaturvorrichtung angehoben werden kann. Dieser Krankhaken kann ebenso fernbedient ein- und ausgehängt werden.

Bei einer bevorzugten Ausgestaltung der Erfindung erfolgt eine Fernbedienung der Schritte c) bis e) über eine am Container vorhandene Kommunikationsschnittstelle. Über diese Schnittstelle kann dann von einer Schaltzentrale aus die Dekontaminationsvorrichtung und das Transportbehältnis aus dem Gestell ausgefahren werden, so dass sich die Dekontaminationsvorrichtung und das Transportbehältnis über der Wasseroberfläche befinden und schließlich das Transportbehältnis mit der Reparaturvorrichtung und, wenn vorhanden, mit der Positioniervorrichtung in den mit Wasser gefüllten Behälter herabgelassen werden. Somit ist es nicht erforderlich, dass sich bei den genannten Schritten ein Mensch in unmittelbarer Nähe des Behälters befindet. Es erfolgt vielmehr eine Fernsteuerung aus der Schaltzentrale heraus, welche in sicherer Entfernung von dem Behälter angeordnet sein kann. Die Schaltzentrale kann mittels Kabel an die Kommunikationsschnittstelle des Containers angeschlossen sein, so dass die einzelnen Steuerbefehle über diese Kabel zur Kommunikationsschnittstelle und von dort aus in die einzelnen Geräte wie Gestell, Aufzugsvorrichtung, Dekontaminationsvorrichtung oder Reparaturvorrichtung übertragen werden. Zur Überwachung der einzelnen Arbeitsschritte kann Videotechnik eingesetzt werden, mit deren Hilfe ein Fortschritt des Arbeitsprozesses beispielsweise auf Monitoren in der Schaltzentrale beobachtet werden kann.

Die Kommunikationsschnittstelle kann jedoch bevorzugterweise auch derart ausgestaltet sein, dass eine kabellose Verbindung von der Schaltzentrale zur ihr hergestellt wird. Eine Übertragung der einzelnen Steuerbefehle erfolgt dann per Funk.

Vorzugweise wird ein Untergrund der schadhaften Stelle der Behälterwand mittels der vorstehend beschriebenen Reinigungsvorrichtung der Reparaturvorrichtung gereinigt, bevor der Klebstoff eingebracht wird.

Dazu kann insbesondere die Reparaturvorrichtung mittels Befestigungsmitteln, die als die vorstehend beschriebenen Saugfüße ausgebildet sind, an der Behälterwand (4) befestigt werden.

Besonders bevorzugt wird somit die vorstehend beschriebene Reparaturmatrize derart an der Behälterwand angeordnet wird, dass die schadhafte Stelle von der Reparaturmatrize überdeckt wird und im Hohlraum zwischen Behälterwand und Reparaturmatrize Klebstoff eingebracht wird.

Zur weiteren Erläuterung der Erfindung wird auf das in den Figuren dargestellte Ausführungsbeispiel verwiesen. Es zeigen:
Fig. 1: Die erfindungsgemäße Reparaturvorrichtung in perspektivischer Darstellung,
Fig. 2: Einen Ausschnitt eines Teils der Reparaturvorrichtung in einem Schnittbild,
Fig. 3: Das Abdeckblech,
Fig. 4: Die Reparaturvorrichtung mit einem Unterwasserschwebefahrzeug in perspektivischer Ansicht,
Fig. 5: Die Reparaturvorrichtung mit einem Unterwasserschwebefahrzeug in Seitenansicht,
Fig. 6: Die Reparaturvorrichtung mit einem Unterwasserschwebefahrzeug in perspektivischer Ansicht,
Fig. 7: Die Reparaturvorrichtung mit einem Unterwasserschwebefahrzeug in Seitenansicht,
Fig. 8: Die Reparaturvorrichtung mit einem Gestänge bzw. Seilzug,
Fig. 9 bis 12: Die Reparaturvorrichtung in unterschiedlichen Situationen während eines Reparaturvorgangs,
Fig. 13 einen Container mit Gestell,
Fig. 14 einen Container mit ausgefahrenem Gestell,
Fig. 15 das Gestell während einer Transportsituation,
Fig. 16 ein am Rand eines Behälters platziertes Gestell mit ausgefahrener Dekontaminationsvorrichtung sowie Transportbehältnis,
Fig. 17 das Gestell mit ausgefahrener Dekontaminationsvorrichtung und darin befindlichem Transportbehältnis.

Einander entsprechende Elemente sind in allen Figuren mit den gleichen Bezugszeichen versehen.

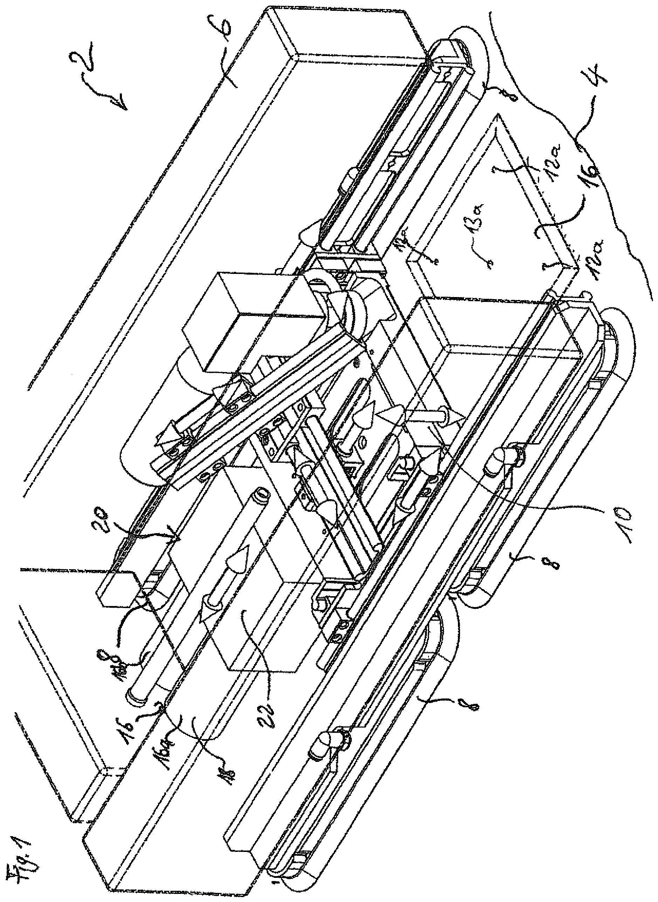

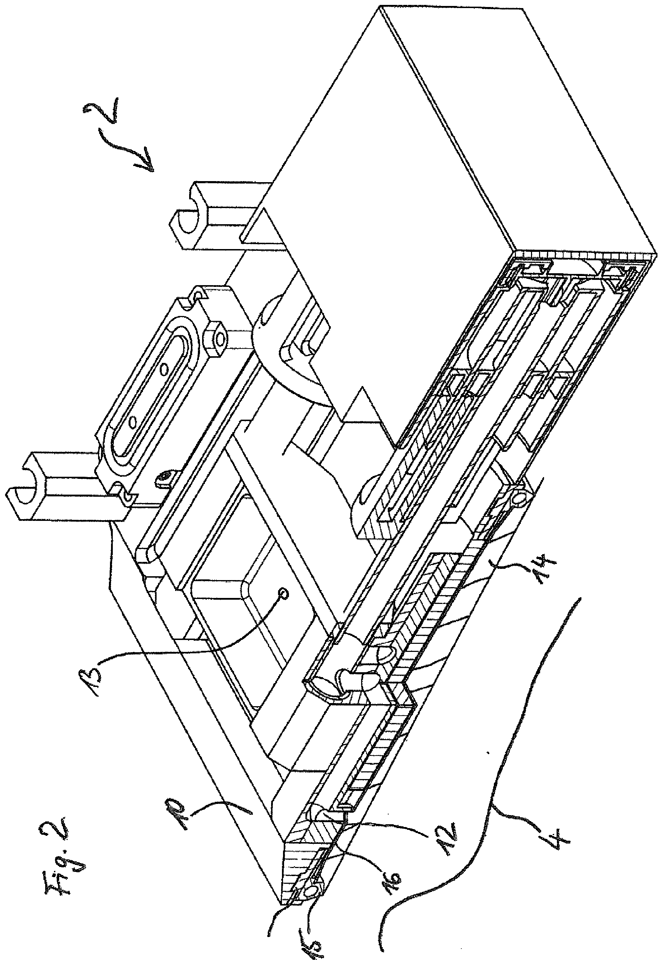

Fig. 1 und teilweise Fig. 2 zeigen die erfindungsgemäße Reparaturvorrichtung 2 zur Reparatur eines Schadens an einer unter Wasser befindlichen Behälterwand 4. Die Reparaturvorrichtung 2 weist einen Träger 6 auf, an dem Mittel 8 zu dessen Befestigung an der Behälterwand 4 angeordnet sind. Im Ausführungsbeispiel handelt es sich dabei um vier Saugfüße.

Ferner ist auf dem Träger 6 eine Reparaturmatrize 10 angeordnet, welche mindestens eine, in diesem Ausführungsbeispiel vier Einspritzöffnungen 12 sowie eine Austrittsöffnung aufweist und welche ferngesteuert gegen die Behälterwand 4 gedrückt werden kann, um die schadhafte Stelle der Behälterwand 4 zu überdecken und einen durch Reparaturmatrize 10 und Behälterwand 4 gebildeten Raum 14 abzudichten. Die Abdichtung geschieht dabei mit einer vorzugsweise flexiblen Dichtung 15. Die Reparaturmatrize 10 hat in diesem Fall eine quadratische Fläche und ist derart geformt, dass sich zwischen der Behälterwand 4 und der Reparaturmatrize 10 ein hohler Raum 14 ausbildet. Dieser Raum 14 ist also vollumfänglich durch die Behälterwand 4 und die Reparaturmatrize 10 begrenzt und abgeschlossen. Zwischen Reparaturmatrize 10 und Behälterwand 4 befindet sich vorzugsweise eine flexible Dichtung 15, die dafür sorgt, dass zwischen Reparaturmatrize 10 und Behälterwand 4 kein Wasser aus dem Raum 14 ausdringen kann. Lediglich die Einspritzöffnungen 12 und die Austrittsöffnung 13 ermöglichen einen Zugang zu diesem Raum 14.

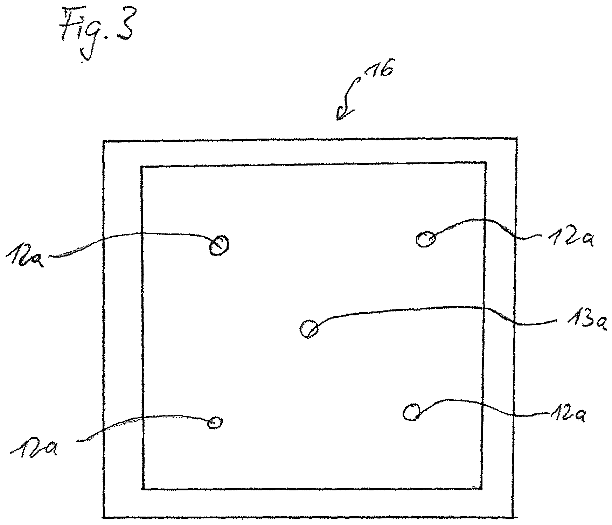

Zusätzlich umfasst die Reparaturvorrichtung optional ein Abdeckblech 16, das in Fig. 3 näher dargestellt ist. Dieses wird vor dem Reparaturvorgang in den Raum 14 zwischen Behälterwand 4 und Reparaturmatrize 10 eingebracht. Auch das Abdeckblech 16 weist mindestens eine, in diesem Fall vier Einspritzöffnungen 12a und mindestens eine Austrittsöffnung 13a auf. Auch das Abdeckblech hat in diesem Fall eine quadratische Fläche. Die Anordnung der Einspritzöffnungen 12a und der Austrittsöffnung 13a entspricht denen der Einspritzöffnungen 12 und Austrittsöffnung 13 in der Reparaturmatrize 10. Die Austrittsöffnung 13a befindet sich zentral im Mittelpunkt der quadratischen Fläche, während die Einspritzöffnungen 12a nach außen beabstandet um die Austrittsöffnung 13a herum befinden.

Auf dem Träger 6 ist außerdem ein Reservoir 17 für einen Klebstoff 18 angeordnet. Außerdem ist auf dem Träger 6 eine fernsteuerbare Einspritzvorrichtung 20 zum Einspritzen von Klebstoff 18 aus dem Reservoir 17 in die Einspritzöffnungen 12 der Reparaturmatrize 10 sowie der Einspritzöffnungen 12a der Reparaturmatrize angeordnet, so dass mittels des Klebstoffes 18 der durch die Reparaturmatrize 10 bzw. das Abdeckblech 16 und Behälterwand 4 gebildete Raum 14 mit diesem gefüllt werden kann.

Das Reservoir 17 umfasst für jeweils eine Komponente eines Mehr-Komponenten-Klebstoffs 18 eine Kammer, in diesem Fall also zwei Kammern 17a, 17b. Außerdem ist auf dem Träger 6 eine Mischvorrichtung 22 angeordnet, mit welcher die einzelnen Komponenten des Klebstoffs 18 gemischt werden können.

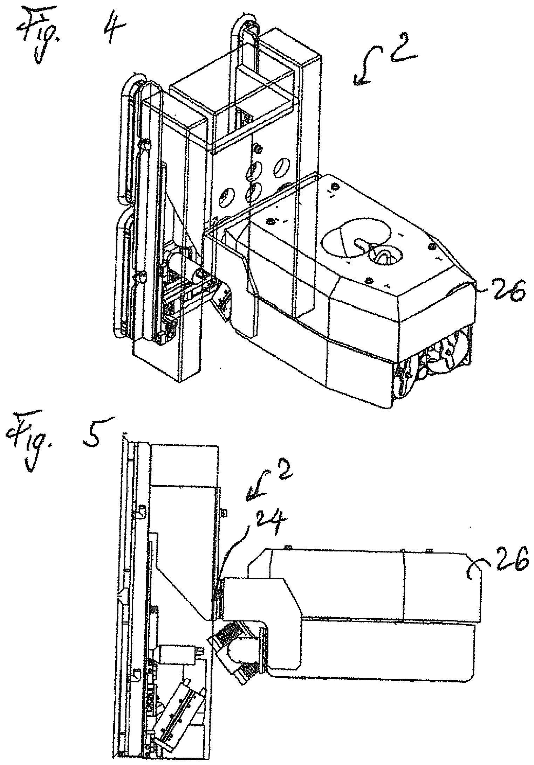

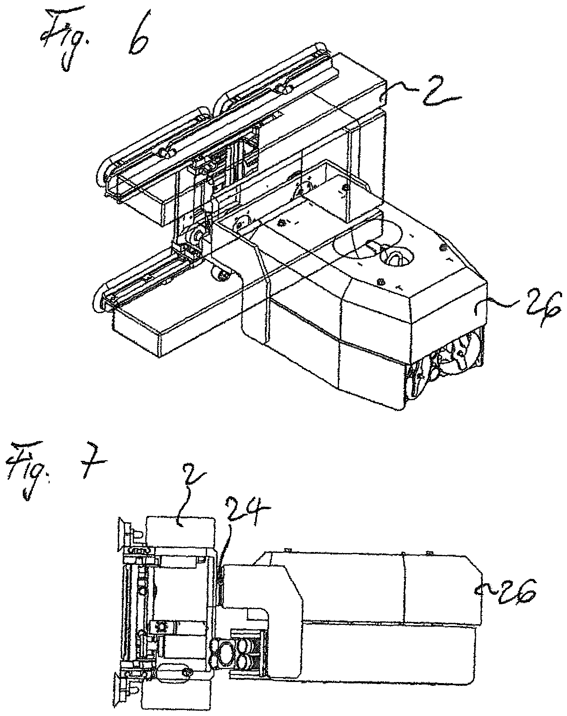

Um eine Manövrierbarkeit der erfindungsgemäßen Reparaturvorrichtung 2 in Wasser zu ermöglichen, weist diese eine Kupplung 24 auf, mit der die Reparaturvorrichtung 2 mit einer Positioniervorrichtung 26 verbindbar ist. Insbesondere kann es sich bei der Positioniervorrichtung 26 um ein fernsteuerbares Unterwasserschwebefahrzeug handeln, wie es in den Figuren 4 bis 7 dargestellt ist. Die Kupplung 24 ist dabei derart ausgestaltet, dass mehrere Möglichkeiten einer Anordnung von Reparaturvorrichtung 2 und Positioniervorrichtung 26 ermöglicht werden. In Fig. 4 und 5 ist die Reparaturvorrichtung 2 in vertikaler Richtung gegenüber der Positioniervorrichtung 26 angeordnet, während in den Figuren 6 und 7 eine horizontale Ausrichtung der Reparaturvorrichtung 2 gegenüber der Positioniervorrichtung 26 erfolgt. Somit wird ein möglichst variabler Einsatz der Reparaturvorrichtung 2 in unterschiedlichen Positionen und Stellen einer Behälterwand 4 ermöglicht.

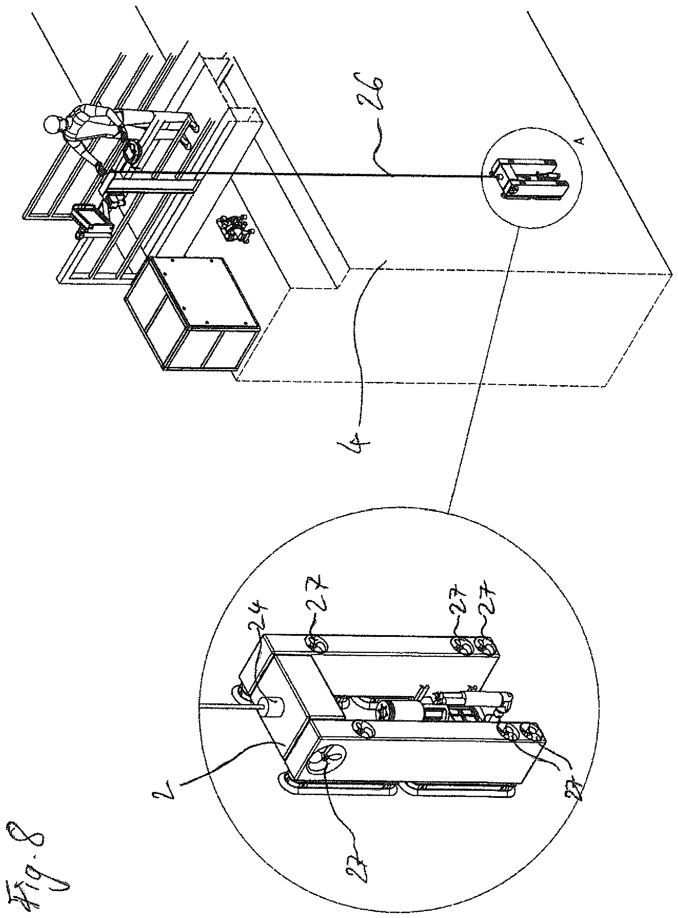

Eine weitere Ausführung einer Positioniervorrichtung 26 ist in Fig. 8 dargestellt. Diese wird in diesem Fall durch ein Gestänge und/oder einem Seilzug gebildet. Die Positioniervorrichtung 26 ist auch hier mit einer Kupplung 24 mit der Reparaturvorrichtung 2 verbunden. Zur Positionierung kann die Vorrichtung 2 zusätzlich zu der Positioniervorrichtung 26 mit eigenen Antrieben 27 versehen sein. Mit Hilfe des Gestänges sowie den Antrieben 27 ist dann eine ferngesteuerte Bewegung der Reparaturvorrichtung 2 und damit eine Positionierung an der Behälterwand 4 gewährleistet.

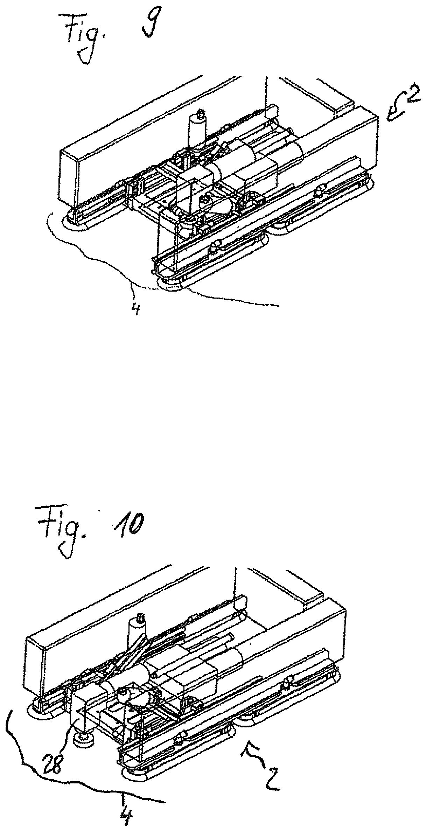

In Fig. 9 ist nun eine Situation dargestellt, in der die Vorrichtung 2 an der Behälterwand 4 mittels der Mittel zur Befestigung 8, also den Saugfüßen befestigt wird. Nach der Befestigung der Vorrichtung 2 an der Behälterwand 4 wurde die Positioniervorrichtung 26 von der Reparaturvorrichtung 2 abgekoppelt.

Danach wird, wie in Fig. 10 gezeigt, mittels einer an der Reparaturvorrichtung 2 angeordneten Reinigungsvorrichtung 28 der Untergrund der schadhaften Stelle der Behälterwand 4 gereinigt.

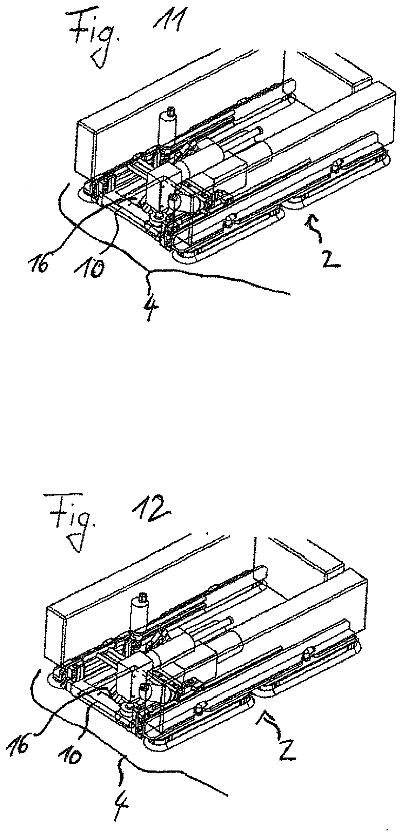

Schließlich wird die Reparaturmatrize 10 zusammen mit dem Abdeckblech 16, wie in Fig. 11 ersichtlich, über der schadhaften Stelle positioniert. Die Reparaturmatrize 10 deckt dabei die schadhafte Stelle vollumfänglich ab und bildet einen Raum 14, der einen Hohlraum zwischen der Reparaturmatrize und Behälterwand definiert.

Wie in Fig. 12 abgebildet, erfolgt sodann ferngesteuert mittels der Einspritzvorrichtung 20 eine Einspritzung des Klebstoffes 18 aus den beiden Kammern 17a, 17b des Reservoirs 17 in die Einspritzöffnungen 12 der Reparaturmatrize 10 und 12a des Abdeckbleches 16. Das in dem Raum 14 befindliche Wasser wird durch den eindringenden Klebstoff 18 verdrängt und entweicht durch die Austrittsöffnung 13, 13a aus dem Raum 14. Somit wird der Raum 14 nach und nach vollständig mit Klebstoff 18 gefüllt. Der überschüssige Klebstoff 18 wird dabei in einer Auffangkammer aufgefangen. Im Anschluss erfolgt parallel zur Reparaturmatrize 10 eine Verschiebung der Einspritzvorrichtung 20. Die Einspritzöffnungen 12 und die Austrittsöffnung 13 sind für den Aushärtungsprozess vollständig verschlossen. Nach dessen Aushärten ist die schadhafte Stelle repariert.

Abschließend wird die Reparaturmatrize 10 von der schadhaften Stelle entfernt und die Reparaturvorrichtung 2 durch lösen der Mittel 8 von der Behälterwand 4 gelöst. Das Abdeckblech 16 hingegen bleibt an dem verklebten Klebstoff 18 haften und schützt diesen nach dem Reparaturprozess beispielsweise vor mechanischer Beschädigung, so dass eine dauerhafte Reparatur der schadhaften Stelle erfolgt.

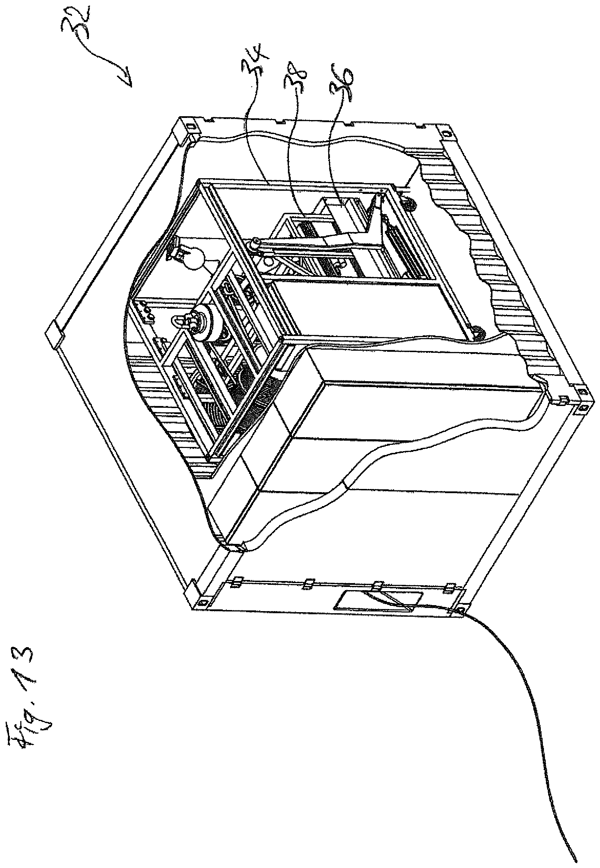

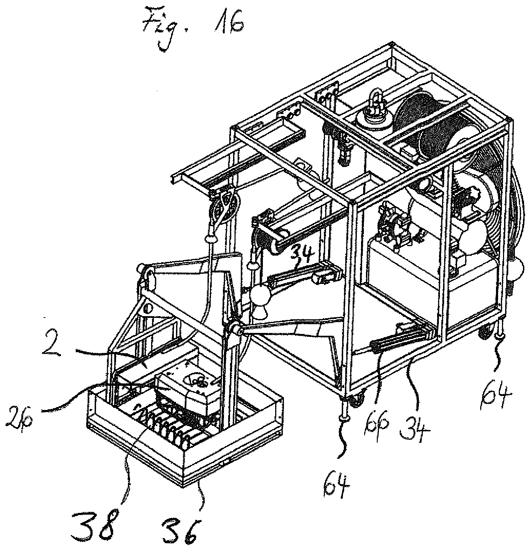

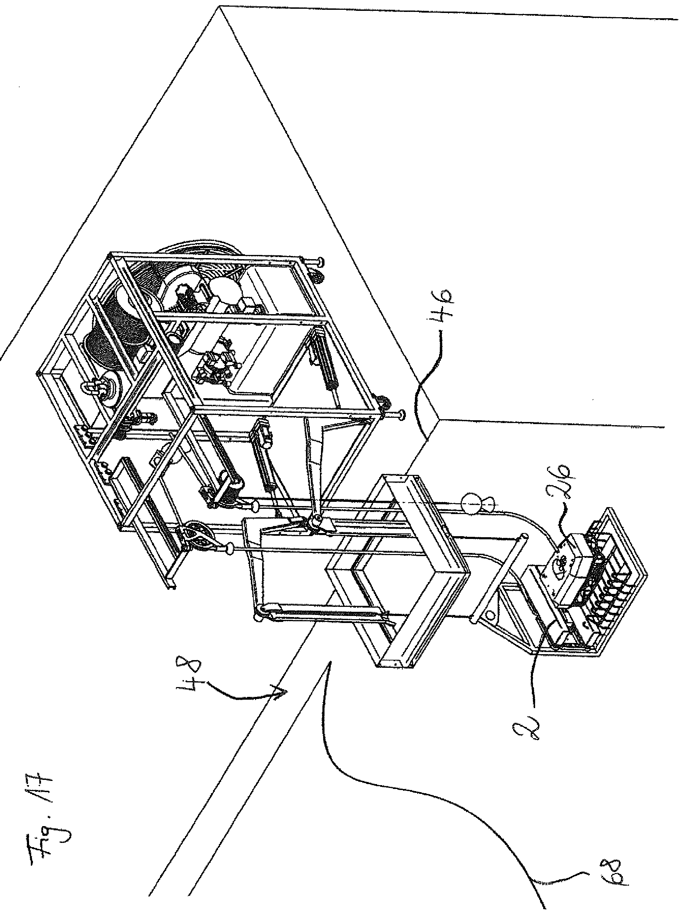

Fig. 13 zeigt einen Container 32, in dem sich ein Gestell 34 befindet. Innerhalb des Gestells 34 ist ferner eine Dekontaminationsvorrichtung 36 und ein Transportbehältnis 38 für die vorstehend beschriebene und in den Figuren 16 und 17 nochmals dargestellte Reparaturvorrichtung 2 angeordnet.

Das Verfahren zeichnet sich nun insbesondere dadurch aus, dass in einem ersten Schritt a) der Container 32 in der Nähe des Einsatzortes mitsamt den oben genannten Komponenten bereitgestellt wird. Eine derartige Bereitstellung kann bspw. mittels eines Tiefladers und eines Autokrans geschehen.

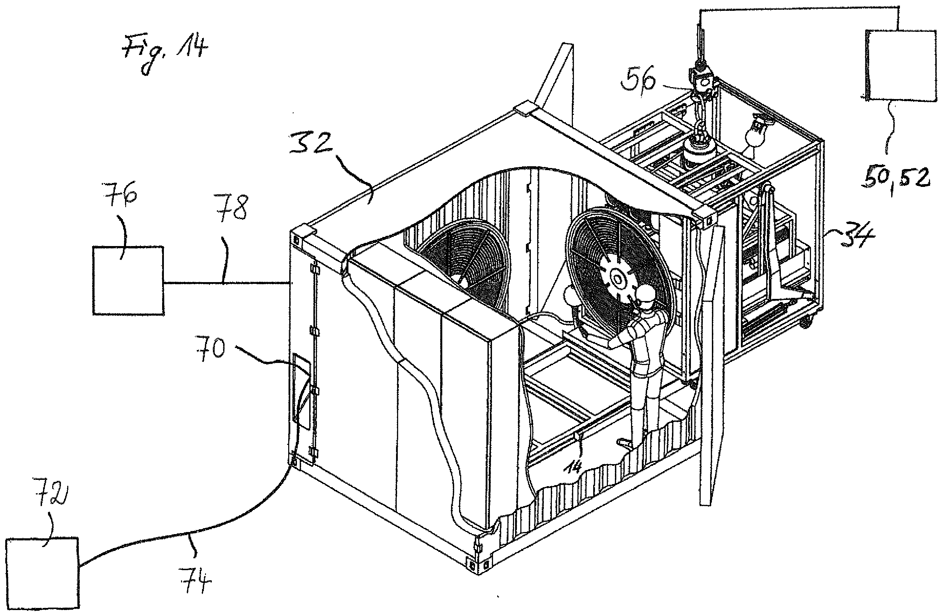

In einem weiteren Schritt b) wird das Gestell 34 aus dem Container 32 ausgeladen. Eine derartige Situation ist in Fig. 14 näher dargestellt. Wie in Fig. 14 ersichtlich, wurde das Gestell 34 mittels der Transportschienen 44 aus dem Container 32 ausgeladen.

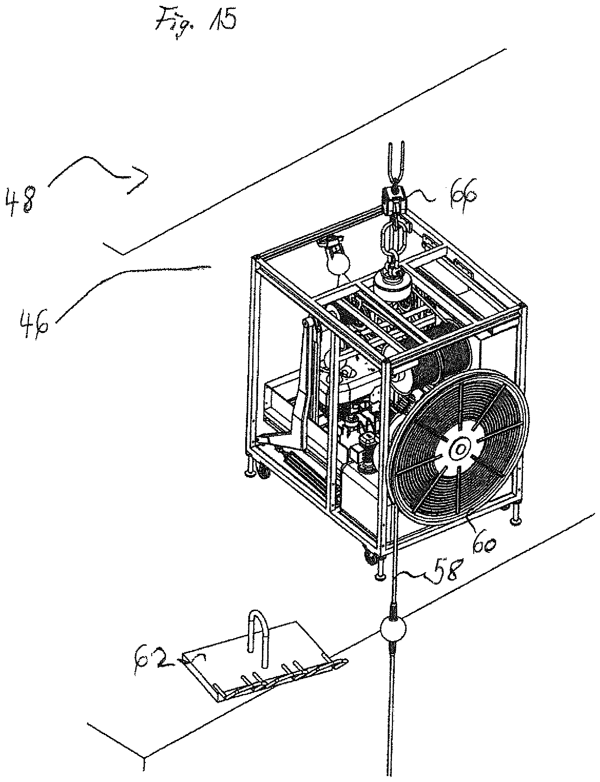

Danach wird das Gestell 34 gemäß Schritt c) am in Fig. 15 und 17 dargestellten Rand 46 des Behälters 48 platziert. Dies geschieht mit Hilfe einer Hubvorrichtung 50, welche im Ausführungsbeispiel durch einen Kran 52 gebildet wird. Um ein Anheben des Gestells 34 zu ermöglichen, ist an diesem eine Öse 54 angebracht, in die ein vorzugsweise fernbedienter Kranhaken 56 eingehängt wird.

In Fig. 15 ist nun eine Situation dargestellt, in der das Gestell 34 freischwebend am Kranhaken 56 hängt und in Richtung des Randes 46 des Behälters 48 bewegt wird. Um eine spätere Versorgung der Reparaturvorrichtung 2 mit Energie und eine Fernbedienung zu ermöglichen, ist an dem Gestell 34 eine Versorgungsleitung 58 angebracht, welche auf einer ebenfalls am Gestell 34 angeordneten Trommel 60 aufgerollt ist. Während des Transports des Gestells zu dem gewünschten Ort des Randes 46 des Behälters 48 wird die Versorgungsleitung 58 von der Trommel 60 abgerollt, so dass weiterhin eine Verbindung des Gestells 34 zum Container 32 sichergestellt bleibt. Zur Fixierung und Stabilisierung der Versorgungsleitung 58 über größere Strecken kann diese, wie im Ausführungsbeispiel in eine Fixiereinrichtung 62 eingehängt werden.

In Fig. 16 ist nun eine Situation dargestellt, in der sich das Gestell 34 befindet, wenn es am Rand 46 des Behälters 48 abgestellt wird. Das Gestell 34 wird mit Füßen 64 an diesem Ort fixiert, so dass es nicht wegrollen kann.

In Schritt d) des Verfahrens wird dann die Dekontaminationsvorrichtung 36 mit Hilfe der Bewegung von Hubzylindern 66 mitsamt des Transportbehältnisses 38 aus dem Gestell 34 ausgefahren, so dass sich die Dekontaminationsvorrichtung 36 und das Transportbehältnis 38 oberhalb der in Fig. 17 dargestellten Wasseroberfläche 68 befinden.

Wie in Fig. 17 dargestellt, wird dann das Transportbehältnis 38 mit der an der Positioniervorrichtung 26 angekoppelten Reparaturvorrichtung 2 in den mit Wasser gefüllten Behälter 48 herabgelassen. Die Positioniervorrichtung 26 wird durch ein Unterwasserschwebefahrzeug gebildet.

Die Durchführung der Schritte c) bis e) sowie die Steuerung der Reparaturvorrichtung 2 und auch der Positioniervorrichtung 26 erfolgt mittels einer Fernbedienung. Hierzu umfasst der Container 32 Schaltschränke mit einer Kommunikationsschnittstelle 70 über die einerseits eine Schaltzentrale 72 mittels eines Kabels 74 beispielsweise mit einem Lichtwellenleiter und andererseits die Versorgungsleitung 58 angeschlossen ist. Über diese Verbindung können dann Steuerbefehle aus sicherer Entfernung von der Schaltzentrale 72 zu den einzelnen fernsteuerbaren Komponenten gelangen. Insbesondere können also mittels der Schaltzentrale 72 die Dekontaminationsvorrichtung 36 und das Transportbehältnis 38 aus dem Gestell ausgefahren werden, so dass sich die Dekontaminationsvorrichtung 36 und das Transportbehältnis 38 über der Wasseroberfläche befinden und schließlich das Transportbehältnis 38 mit der Reparaturvorrichtung 2 in den mit Wasser gefüllten Behälter 48 herabgelassen werden. Auch eine weitere Fernsteuerung der Positioniervorrichtung 26 und der Reparaturvorrichtung 2 und somit der Reparaturprozess können über diese Verbindung und anhand der Schaltzentrale erfolgen. Dadurch wird ermöglicht, dass die Positionierung der Reparaturvorrichtung 2 sowie deren Einsatz auch an einem Ort erfolgen kann, der unzugänglich für Bedienpersonal ist.

Die Verbindung der Schaltzentrale 72 zu der Kommunikationsschnittstelle 70 kann alternativ auch kabellos anhand einer Funkverbindung erfolgen. Ein Verlegen von Kabeln ist somit entbehrlich.

Die Energieversorgung der einzelnen Komponenten kann über eine externe Energieversorgungseinheit 76 erfolgen, die mittels eines Kabels 78 an den Container 32 angeschlossen ist.

Nach Abschluss eines Reparaturvorgangs kann die Reparaturvorrichtung 2 sowie die Positionierungsvorrichtung 26 mit Hilfe der Dekontaminationsvorrichtung 36 beispielsweise durch ein physikalisches Reinigungsverfahren dekontaminiert werden.

## Patentansprüche

1. Reparaturvorrichtung (2) zur Reparatur eines Schadens an einer unter Wasser befindlichen Behälterwand (4), mit einem Träger (6) und folgender Ausgestaltung:
- der Träger (6) weist Mittel zu dessen Befestigung (8) an der Behälterwand (4) auf,
- auf dem Träger (6) ist eine Reparaturmatrize (10) angeordnet, welche mindestens eine Einspritzöffnung (12) sowie mindestens eine Austrittsöffnung (13) aufweist und ferngesteuert gegen die Behälterwand (4) gedrückt werden kann, um den Schaden an der Behälterwand (4) zu überdecken und einen durch Reparaturmatrize (10) und Behälterwand (4) gebildeten Raum (14) abzudichten,
- auf dem Träger (6) ist ein Reservoir (17) für einen Klebstoff (18) angeordnet,
- auf dem Träger (6) ist eine fernsteuerbare Einspritzvorrichtung (20) zum Einspritzen von Klebstoff (18) aus dem Reservoir (17) in die Einspritzöffnung (12) der Reparaturmatrize (10) angeordnet, so dass mittels des Klebstoffes (18) der durch die Reparaturmatrize (10) und Behälterwand (4) gebildete Raum (14) gefüllt wird.

2. Reparaturvorrichtung (2) nach Anspruch 1, welche eine Kupplung (24) aufweist, mit der die Reparaturvorrichtung (2) mit einer Positioniervorrichtung (26) verbindbar ist.

3. Reparaturvorrichtung (2) nach Anspruch 2, welche eine Kupplung (24) aufweist, mit der die Vorrichtung (2) mit einem fernsteuerbaren Unterwasserschwebefahrzeug verbindbar ist.

4. Reparaturvorrichtung (2) nach einem der vorhergehenden Ansprüche, welche eine Reinigungsvorrichtung (28) aufweist.

5. Reparaturvorrichtung (2) nach einem der vorhergehenden Ansprüche, bei der die Mittel zu dessen Befestigung (8) an der Behälterwand (4) Saugfüße umfassen.

6. Reparaturvorrichtung (2) nach einem der vorhergehenden Ansprüche, bei der die Reparaturmatrize (10) mehrere Einspritzöffnungen (12) aufweist.

7. Reparaturvorrichtung (2) nach einem der vorhergehenden Ansprüche, bei der das Reservoir (17) mehrere Kammern (17a, b) für jeweils eine Komponente eines Mehr-Komponenten- Klebstoffs (18) und der Träger (6) eine Mischvorrichtung (22) zur Mischung der einzelnen Komponenten umfasst.

8. Reparaturvorrichtung (2) nach einem der vorhergehenden Ansprüche, welche ein Abdeckblech (16) umfasst, welches zum Schutz des verklebten Klebstoffes (18) dient.

9. Verfahren zur Reparatur eines Schadens an einer unter Wasser befindlichen Behälterwand mit einer Reparaturvorrichtung (2) nach einem der vorhergehenden Ansprüche.

10. Verfahren nach Anspruch 9, wobei die Reparaturvorrichtung (2) zur Reparatur des Schadens an der unter Wasser befindlichen Behälterwand positioniert wird und das Positionieren der Reparaturvorrichtung (2) folgende Schritte umfasst:
a) Bereitstellen eines Containers (62), in dem sich ein Gestell (34) mit einer Aufzugsvorrichtung befindet, wobei innerhalb des Gestells (34) eine Dekontaminationsvorrichtung (36) und ein Transportbehältnis (38) mit der Reparaturvorrichtung (2) nach einem der vorhergehenden Ansprüche angeordnet sind,
b) Ausladen des Gestells (34) aus dem Container (32),
c) Platzierung des Gestells (34) am Rand des Behälters (48),
d) Ausfahren der Dekontaminationsvorrichtung (36) und des Transportbehältnisses (38) aus dem Gestell (34), so dass sich die Dekontaminationsvorrichtung (36) und das Transportbehältnis (38) über der Wasseroberfläche (68) befinden,
e) Herablassen des Transportbehältnisses (38) mit der Reparaturvorrichtung (2) in den mit Wasser gefüllten Behälter (48).

11. Verfahren nach Anspruch 10, bei dem das Gestell (34) in Schritt c) mittels einer Hubvorrichtung (50) am Rand des Behälters (48) platziert wird.

12. Verfahren nach Anspruch 11, bei dem als Hubvorrichtung (20) ein Kran (22) verwendet wird.

13. Verfahren nach einem der Ansprüche 9 bis 12, bei dem eine Fernbedienung der Schritte c) bis e) über eine am Container (32) vorhandene Kommunikationsschnittstelle (70) erfolgt.

14. Verfahren nach Anspruch 13, bei dem über die Kommunikationsschnittstelle (70) eine kabellose Verbindung zu einer Schaltzentrale (72) hergestellt wird.

15. Verfahren nach einem der vorhergehenden Ansprüche, bei dem die Reparaturvorrichtung (2) nach Schritt e) mittels einer Positioniervorrichtung (26) ferngesteuert im Wasser manövriert wird.

16. Verfahren nach einem der vorhergehenden Ansprüche, bei dem ein Untergrund einer schadhaften Stelle der Behälterwand 4 mittels einer Reinigungsvorrichtung (28) der Reparaturvorrichtung (2) gereinigt wird.

17. Verfahren nach einem der vorhergehenden Ansprüche, bei dem die Reparaturvorrichtung (2) mittels Saugfüße an der Behälterwand (4) befestigt wird.

18. Verfahren nach einem der vorhergehenden Ansprüche, bei dem eine Reparaturmatrize (10) derart an der Behälterwand (4) angeordnet wird, dass die schadhafte Stelle von der Reparaturmatrize (10) überdeckt wird und zwischen Behälterwand (4) und Reparaturmatrize (10) Klebstoff (18) eingebracht wird.

## Claims

1. Repair device (2) for repairing damage to a container wall (4) located underwater, having a carrier (6) and the following formation:
- the carrier (6) has means for securing (8) itself to the container wall (4),
- a repairing die (10) is arranged on the carrier (6), said repairing die (10) having at least one injection opening (12) and at least one outlet opening (13) and can be pressed against the container wall (4) in a remote-controlled manner in order to cover the damage to the container wall (4) and seal a space (14) formed by the repairing die (10) and container wall (4),
- a reservoir (17) for an adhesive (18) is arranged on the carrier (6),
- a remote-controllable injection device (20) for injecting adhesive (18) from the reservoir (17) into the injection opening (12) of the repairing die (10) is arranged on the carrier (6) such that the space (14) formed by the repairing die (10) and container wall (4) is filled by means of the adhesive (18).

2. Repair device (2) according to claim 1 that has a coupling (24) with which the repair device (2) is able to be connected to a positioning device (26).

3. Repair device (2) according to claim 2 that has a coupling (24) with which the device (2) is able to be connected to a remote-controllable submersible vehicle.

4. Repair device (2) according to one of the preceding claims that has a cleaning device (28).

5. Repair device (2) according to one of the preceding claims, wherein the means for fastening (8) itself to the container wall (4) comprise suction cups.

6. Repair device (2) according to one of the preceding claims, wherein the repairing die (10) has several injection openings (12).

7. Repair device (2) according to one of the preceding claims, wherein the reservoir (17) comprises several chambers (17a, b) each for one component of a multi-component adhesive (18) and the carrier (6) comprises a mixing device (22) for mixing the individual components.

8. Repair device (2) according to one of the preceding claims that comprises a covering plate (16) that serves to protect the adhered adhesive (18).

9. Method for repairing damage to a container wall located underwater with a repair device (2) according to one of the preceding claims.

10. Method according to claim 9, wherein the repair device (2) for repairing damage to the container wall located underwater is positioned and positioning the repair device (2) comprises the following steps:
a) providing a container (62) in which a frame (34) having a hoisting device is located, wherein a decontamination device (36) and a transport vessel (38) having the repair device (2) according to one of the previous claims are arranged inside the frame (34),
b) unloading the frame (34) from the container (32),
c) placing the frame (34) on the edge of the container (48),
d) driving the decontamination device (36) and the transport vessel (38) out of the frame (34) such that the decontamination device (36) and the transport vessel (38) are located above the water surface (68),
e) lowering the transport vessel (38) with the repair device (2) into the container (48) filled with water.

11. Method according to claim 10, wherein the frame (34) is placed on the edge of the container (48) in step c) by means of a lifting device (50).

12. Method according to claim 11, wherein a crane (22) is used as the lifting device (20).

13. Method according to one of claims 9 to 12, wherein remotely operating steps c) to e) takes place via a communication interface (70) present on the container (32).

14. Method according to claim 13, wherein a wireless connection to a switching centre (72) is produced via the communication interface (70).

15. Method according to one of the preceding claims, wherein the repair device (2) is manoeuvred in the water after step e) in a remote-controlled manner by means of a positioning device (26).

16. Method according to one of the preceding claims, wherein a base of a damaged area of the container wall 4 is cleaned by means of a cleaning device (28) of the repair device (2).

17. Method according to one of the preceding claims, wherein the repair device (2) is fixed on the container wall (4) by means of suction cups.

18. Method according to one of the preceding claims, wherein a repairing die (10) is arranged on the container wall (4) in such a way that the damaged area is covered by the repairing die (10) and adhesive (18) is introduced between the container wall (4) and the repairing die (10).

## Revendications

1. Dispositif de réparation (2) permettant de réparer un dommage sur une paroi de conteneur (4) situé sous l'eau, comprenant un support (6) et ayant la configuration suivante :
- le support (6) comprend des moyens lui permettant d'être fixé (8) sur la paroi de conteneur (4),
- une matrice de réparation (10), laquelle présente au moins une ouverture d'injection (12) et au moins une ouverture de sortie (13) et peut être pressée de manière commandée contre la paroi de conteneur (4), est disposée sur le support (6) afin de recouvrir le dommage sur la paroi de conteneur (4) et d'étanchéifier un espace (14) formé par la matrice de réparation (10) et la paroi de conteneur (4),
- un réservoir (17) pour adhésif (18) est disposé sur le support (6),
- un dispositif d'injection (20), pouvant être commandé et destiné à injecter un adhésif (18) depuis le réservoir (17) dans l'ouverture d'injection (12) de la matrice de réparation (10), est disposé sur le support (6), de sorte que l'espace (14) formé par la matrice de réparation (10) et la paroi de conteneur (4) est rempli au moyen de l'adhésif (18).

2. Dispositif de réparation (2) selon la revendication 1, présentant un moyen de couplage qui permet de le (2) relier à un dispositif de positionnement (26).

3. Dispositif de réparation (2) selon la revendication 2, présentant un moyen de couplage (24) qui permet de le (2) relier à un aéroglisseur sous-marin commandé.

4. Dispositif de réparation (2) selon l'une quelconque des revendications précédentes, présentant un dispositif de nettoyage (28).

5. Dispositif de réparation (2) selon l'une quelconque des revendications précédentes, sur lequel les moyens destinés à sa fixation (8) sur la paroi de conteneur (4) comprennent des pieds ventouses.

6. Dispositif de réparation (2) selon l'une quelconque des revendications précédentes, sur lequel la matrice de réparation (10) présente plusieurs ouvertures d'injection (12).

7. Dispositif de réparation (2) selon l'une quelconque des revendications précédentes, sur lequel le réservoir (17) comprend plusieurs chambres (17a, b) pour respectivement un composant d'un adhésif (18) multi-composant et le support (6) un dispositif de mélange (22) pour mélanger les différents composants.

8. Dispositif de réparation (2) selon l'une quelconque des revendications précédentes, comprenant une tôle de recouvrement (16) qui sert à protéger l'adhésif (18) collé.

9. Procédé de réparation d'un dommage sur une paroi de conteneur située sous l'eau avec un dispositif de réparation (2) selon l'une quelconque des revendications précédentes.

10. Procédé selon la revendication 9, le dispositif de réparation (2) étant positionné pour réparer le dommage sur la paroi d'un conteneur située sous l'eau et le positionnement du dispositif de réparation (2) comprenant les étapes suivantes :
a) Fourniture d'un conteneur (62) dans lequel se trouve un châssis (34) doté d'un dispositif élévateur, un dispositif de décontamination (36) et un conteneur de transport (38) étant disposés à l'intérieur du châssis (34) avec le dispositif de réparation (2) selon l'une quelconque des revendications précédentes,
b) Déchargement du châssis (34) hors du conteneur (32),
c) Positionnement du châssis (34) sur le bord du conteneur (48),
d) Sortie du dispositif de décontamination (36) et du conteneur de transport (38) hors du châssis (34), de sorte que le dispositif de décontamination (36) et le conteneur de transport (38) se trouvent au-dessus de la surface de l'eau (68),
e) Descente du conteneur de transport (38) avec le dispositif de réparation (2) dans le conteneur (48) rempli d'eau.

11. Procédé selon la revendication 10, dans lequel le châssis (34) est placé, à l'étape c), sur le bord du conteneur (48) au moyen d'un dispositif de levage (50).

12. Procédé selon la revendication 11, dans lequel on utilise une grue (22) en tant que dispositif de levage (20).

13. Procédé selon l'une quelconque des revendications 9 à 12, dans lequel les étapes c) à e) sont commandées par l'intermédiaire d'une interface de communication (70) présente sur le conteneur (32).

14. Procédé selon la revendication 13, dans lequel l'interface de communication (70) permet d'établir une liaison sans fil vers une centrale de commutation (72).

15. Procédé selon l'une quelconque des revendications précédentes, dans lequel le dispositif de réparation (2) est manoeuvré dans l'eau à distance, après l'étape e), au moyen d'un dispositif de positionnement (26).

16. Procédé selon l'une quelconque des revendications précédentes, dans lequel un subjectile d'une zone endommagée de la paroi de conteneur 4 est nettoyé au moyen d'un dispositif de nettoyage (28) du dispositif de réparation (2).

17. Procédé selon l'une quelconque des revendications précédentes, dans lequel le dispositif de réparation (2) est fixé sur la paroi de conteneur (4) au moyen de pieds ventouses.

18. Procédé selon l'une quelconque des revendications précédentes, dans lequel une matrice de réparation (10) est disposée sur la paroi de conteneur (4) de telle manière que la zone endommagée est recouverte par la matrice de réparation (10) et que de l'adhésif (18) est introduit entre la paroi de conteneur (4) et la matrice de réparation (10).
